# EUROPEAN PATENT SPECIFICATION

(11) **EP 0 811 192 B1**
(45) Date of publication and mention of the grant of the patent: **24.03.1999**
(21) Application number: 95939512.0
(22) Date of filing: 29.09.1995
(51) Int. Cl.: G06F 9/44

(54) **OPERATING SYSTEM RUNTIME SUPPORTING RELEASE-TO-RELEASE BINARY COMPATIBILITY**
LAUFZEITSYSTEM EINES BETRIEBSSYSTEMS MIT UNTERSTÜTZUNG VON BINÄRKOMPATIBILITÄT ZWISCHEN VERSIONEN
VERSION MODIFIEE D'EXPLOITATION SUPPORTANT UNE COMPATIBILITE DE VERSION A VERSION AU NIVEAU BINAIRE

(30) Priority: 20.03.1995 US 406442
(43) Date of publication of application: 10.12.1997
(73) Proprietor: OBJECT TECHNOLOGY LICENSING CORP., Cupertino, CA 95014 (US)
(72) Inventor: HENINGER, Andrew, G., Los Altos, CA 94024 (US); GIBBONS, Bill, Los Altos Hills, CA 94022 (US); MEYERS, Richard, Santa Cruz, CA 95060 (US); YEE, Terrence T., Saratoga, CA 95070 (US)
(74) Representative: Kindermann, Manfred
(86) International application number: US9513077
(87) International publication number: WO9629648

(56) References cited:
- EP-A- 0 569 861
- EP-A- 0 603 880
- US-A- 5 297 284
- AIXPERT, August 1995 US, pages 30-36, JENNIFER HAMILTON AT AL.: 'Using SOM with C++'
- C++ REPORT, vol. 3, no. 6, June 1991 ISSN 1040-6042, USA, pages 19-20, SAM DRUKER: '"What's that compiler doing, anyway?" - Virtual function overhead'
- CHRISTINA LAU: 'Object-Oriented Programming using SOM and DSOM' 1995 , JOHN WILEY & SONS, INC. , NEW YORK, US Chapter 4 (pages 70 - 88) see page 75, line 23 - page 78, line 30; figures 4.2 - 4.4

## Description

### FIELD OF THE INVENTION

This invention generally relates to runtime systems for object-oriented programming languages and, more specifically, to the independent evolution of object definition libraries and the applications that use them.

### BACKGROUND OF THE INVENTION

Object-oriented programming languages have been discussed in journals and books such as, "Object-Oriented Analysis and Design" by Grady Booch, published by The Benjamin/Cummins Publishing Company, Inc., 2nd Edition, 1994. This book discusses a variety of aspects of object-oriented principles utilized in many of the patents disclosed in the background art section. The language of C++ is also well documented in journals and books, and will not be discussed in detail here.

Although object-oriented techniques facilitate the development of complex computer programs, existing techniques for placing class definitions into libraries for use by object oriented applications can result in programs that are less efficient in execution speed and require more memory than programs that do not use class libraries. It would be desirable to have method and system for implementing object-oriented programming for release-to-release binary compatible class libraries to improve the execution speed and reduce the memory requirements of the computer program.

Vtables in traditional C++ implementations are initialized with static data. A problem confronting C++ runtime systems is that the size of virtual tables (vtables) can not be determined at compile time because the full set of virtual functions belonging to a class has not been determined. Examples of patents discussing prior art runtime environments include US Patent 5,371,891 which discusses the implementation of a C++ runtime. US Patent 5,371,891 discusses an improved method and system for implementing constructors and destructors in a compiler for an object-oriented programming language is provided. In a preferred embodiment of the present invention, a construction displacement value is added to a pointer for a virtual function that is invoked by a constructor for a class that virtually inherits a base class. The construction displacement value corresponds to the difference between the offset of an occurrence of a virtually inherited class within an instance of the base class and the offset of the occurrence of the virtually inherited class from the occurrence of the base class within an instance of a derived class that inherits the base class. US Patent 5,339,438 discloses an interpretative object-oriented runtime environment.

US Patent 5,339,438 discloses a method, system and program for isolating the executable binary form of computer applications that use object definition libraries from changes in the implementation or specification of object definitions in the library. These objects include adding new methods to an object definition; moving the point of definition for one of the class methods to the class parent class; changing private instance data associated with an object definition; inserting a new parent class definition between the class and its parent class when it has one; and changing the implementation of one of the class methods without changing the methods interface. The objects are achieved by removing offset and size values from the application binary image and putting them in data structures that are initialized at runtime. US Patent 5,339,430 discloses a method and system for dynamic updating and replacement of runtime libraries.

US Patent 5,327,562 discloses a method for implementing virtual function tables in a compiler for an object-oriented programming language. The patent discusses a computer compiler for an object-oriented programming language for implementing virtual functions is provided. In preferred embodiments of the invention, the virtual function table for a class contains a tile table and a plurality of sub-tables. The tile table contain pointers to the sub-tables, and the sub-tables contain pointers to the virtual function members of the class. Each child class shares a sub-table of the parent class when the child class does not override a function in that sub-table. If the child class overrides a function, then the child is allocated its own sub-table. Each virtual function member for a class is identified by a tile table offset and a sub-table offset.

US Patent 5,313,633 discloses a process and a device for deciding class hierarchical relationships of an object-oriented language which performs code processing for affixing the codes each having a predetermined relation to each of those classes and decides the relationship of inheritance in a hierarchy of two optional classes with said series of codes affixed to two optional classes having a hierarchical relationship. US Patent 5,297,284 discloses a method and system for implementing virtual functions and virtual base classes and setting a this pointer for an object-oriented programming language. A method for a computer compiler for an object-oriented programming language for implementing virtual functions and virtual base classes is provided. In preferred embodiments of the present invention, the data structure layout of an object includes a virtual function table pointer, a virtual base table pointer, occurrences of each non-virtual base class, the data members of the class, and occurrences of each virtual base class. If a class introduces a virtual function member and the class has a non-virtual base class with a virtual function table pointer, then the class shares the virtual function table pointer of the non-virtual base class that is first visited in a depth-first, left-to-right traversal of the inheritance tree. Each instance of a given class shares a set of virtual function tables and virtual base tables for that class, and adjusters are used when a function member in a derived class overrides a function member that is defined in more than one base class, and when a derived class has a base class that overrides a function member in a virtual base class of that class and the derived class itself does not override the function member.

### SUMMARY OF THE INVENTION

The subject invention isolates the executable binary form of a computer application utilizing class definition libraries from changes in the implementation or specification of the class libraries. The following changes can be made dynamically to the object definitions from the class library:
(a) new virtual functions can be added to a class;
(b) the point of definition of a virtual function can be moved to a parent class; and
(c) virtual functions inherited from a base class may be overridden.

A preferred embodiment of the invention provides an improved object-oriented runtime. The computer system provides a virtual function table including segmentation, where the virtual functions contributed by each class are placed in a distinct segment. It provides a method for adjusting the size and contents of a virtual function table to reflect evolution in the class definitions implemented by that table, a virtual function call method that accesses a virtual function table based on the segment and the offset within the segment, and virtual function table descriptors that communicate class information from the compiler to the runtime.

### BRIEF DESCRIPTION OF THE DRAWINGS

The foregoing and other aspects and advantages of the present invention will be better understood from the following detailed description of the preferred embodiment of the invention with reference to the accompanying drawings, in which:
Figure 1 is a block diagram showing compiler generation of partial vtables for all classes, descriptors for each vtable, and a list of all vtable descriptors in the compilation unit and the static data area;
Figure 2 is a flowchart of the overall process of compiling, linking, loading and executing files using the present invention;
Figure 3 is a block diagram showing the overall construction of a virtual table used in implementing the release-to-release binary compatibility system and method of the present invention;
Figure 4 shows the overall flow of a virtual function call;
Figure 5 shows the overall performance of a virtual call thunk;
Figure 6 shows development of vtables for several classes which results in generation of an adjustor thunk;
Figure 7 is a flowchart showing the steps of the algorithm used to determine the "this" pointer adjustment;
Figure 8 shows an example of generation of an adjustor thunk, including covariant return adjustments;
Figure 9 shows a diagram of a class hierarchy;
Figure 10 shows the steps for resolving dominance of virtual functions;
Figure 11 shows a block diagram of a layout of instances of classes A, B, C and D;
Figures 12, 13, 14, 15 and 16 show descriptors, incomplete vtables and complete vtables;
Figure 17 is a block diagram showing the inheritance structure of the classes, and layouts of G and F;
Figure 18 shows the descriptors, and incomplete and complete vtables; and
Figure 19 is a block diagram of a computer system in accordance with the present invention.

### DETAILED DESCRIPTION OF A PREFERRED EMBODIMENT OF THE PRESENT INVENTION

Object-oriented programming languages have been discussed in journals and books such as, "Object-Oriented Analysis and Design" by Grady Booch, published by The Benjamin/Cummins Publishing Company, Inc., 2nd Edition, 1994. This book discusses a variety of aspects of object-oriented principles utilized in many of the patents disclosed in the background art section. The language of C++ is also well-documented in journals and books, and will not be discussed in detail here.

The present apparatus and method implements a Release-to-Release Binary Compatibility (RRBC) technique. RRBC facilitates the continued use of old executable files (applications or shared libraries) when parts of the system (other shared libraries) have been upgraded to newer, but otherwise compatible, versions. In other words, code, in the form of executable binaries, continues to operate when the shared libraries upon which it depends are updated with new versions. The code could be almost anything. For example, the code could include end-user applications, third-party shared libraries, device drivers, and/or system extensions.

Various features may be used in a C++ runtime to ease the effort to maintain binary compatibility. A preferred embodiment of the present invention is directed to adding new member functions to classes without recompiling all clients of those classes. This capability is essential for framework based systems where application or component developers will routinely be subclassing system provided classes.

Utilization of a RRBC system and method provides for easy porting to different platforms/Operating Systems (OS)s, Loaders, Load File Formats, and Linkers; portability to plural compiler vendors; and a runtime library to allow plural compiler vendors to modify their compiler to readily utilize the RRBC system and method of the present invention. A preferred embodiment also provides load times comparable to those for programs with traditional static vtables which are fast at execution and vtable sharing so that classes from shared libraries in use in multiple address spaces on the same machine can be shared. A preferred embodiment also provides a reasonable memory footprint for classes from shared libraries, and vtables which appear at the same address in all address spaces. This processing provides for correct operation of objects in a shared memory while minimizing the expansion of load files. Finally, negligible growth in the working set memory required for execution of a program when compared to programs with traditional static vtables.

### COMPUTER SYSTEM

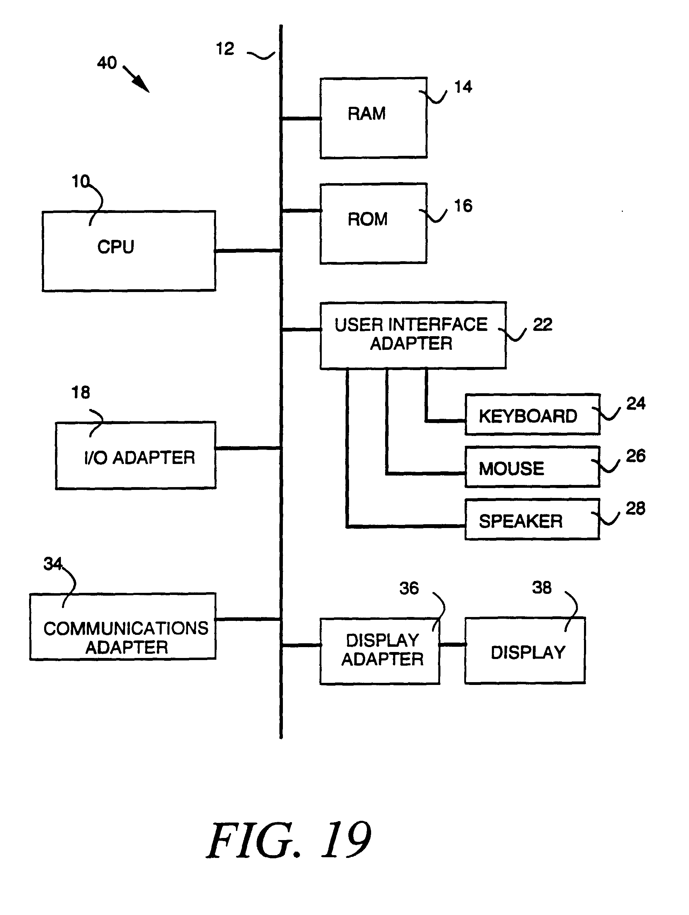

A representative hardware environment is depicted in Figure **19**, which illustrates a suitable hardware configuration of a workstation **40** in accordance with the present invention. The workstation **40** has a central processing unit **10**, such as a conventional microprocessor, and a number of other units interconnected via a system bus **12**. The illustrated workstation **40** shown in Figure **19** includes a Random Access Memory **14** (RAM), a Read Only Memory **16** (ROM), an I/O adapter 18 for connecting peripheral devices such as disk units to the bus **12**, a user interface adapter **22** for connecting a keyboard **24**, a mouse **26**, a speaker **28**, a microphone **32**, and/or other user interface devices such as a touch screen device (not shown) to the bus **12**. The workstation **40** may also have a communications adapter **34** for connecting the workstation **40** to a data processing network **30** and a display adapter **36** connecting the bus **12** to a display device **38**.

The RRBC system and method defined below supports the addition of virtual functions to existing classes, without requiring rebuilding of clients of those classes. Additions are made at the end of the class only. The RRBC enabled compiler fully conforms to standard C++. It should be noted that the principles described herein may be also used to provide release-to-release binary compatibility for other systems having similar characteristics of clients, classes and virtual functions.

To retain full compatibility with previous versions certain rules must be followed when altering a class: 1) The class hierarchy must remain unchanged. 2) Declarations for new virtual functions must appear after the declarations for all pre-existing virtual functions. 3) All old virtual functions must remain, and be declared in the same order. 4) Non-virtual and static member functions can be added without restriction. 5) Previously existing public or protected functions must continue to exist. 6) The total size of an instance must remain unchanged, and all public or protected data members must continue to exist and must remain at the same offset. Private data that is referenced from public or protected in-line member functions counts as public data. 7) Moving functions up the hierarchy can be handled, for example, by tagging the original introduction point.

### Dynamic Construction of Vtables

A virtual function table for a class contains addresses corresponding to the virtual function members associated with that class. The virtual function table is used at run time to invoke the virtual functions indirectly. Each primary class with a virtual function member has an associated virtual function table. The virtual function table contains the addresses of each virtual function member or appropriate adjustor and/or covariant return thunks. The object data structure for such a class contains a virtual function table pointer. The memory for an object is allocated at runtime, the virtual function table pointer is initialized with the address of the associated virtual function table. Thus, all objects of the same class type point to the same virtual function table. To implement the invoking of a virtual function, the compiler generates code to access the virtual function member or thunk through the virtual function table.

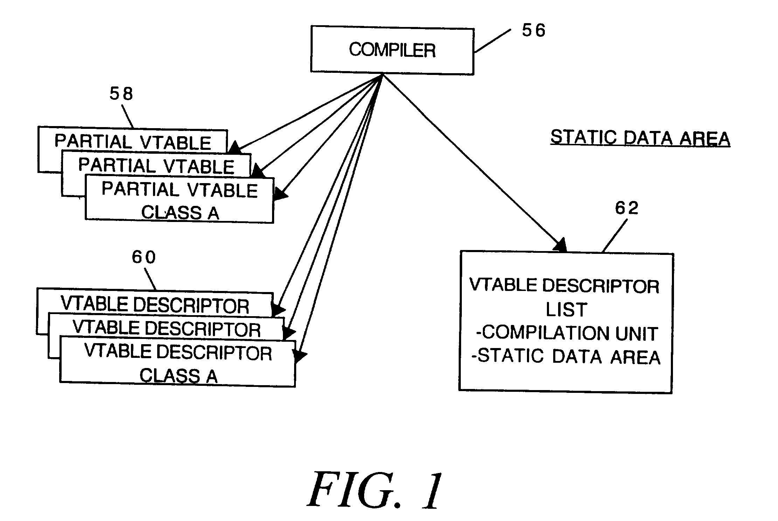

The dynamic construction of vtables is carried out by the compiler, at Static Link Time, and at Load Time. Figure **1** is a block diagram showing compiler **56** generation of partial vtables for all classes **58**, descriptors for each vtable **60**, and a list of all vtable descriptors in the compilation unit and the static data area **62**. Figure **1** shows multiple copies of partial vtables and vtable descriptors, which are intended to convey that one or more of each could be generated by the compiler. Partial vtables for all classes have the size and form of complete vtables, and are in the static data area, as is conventional for vtables. They are, however, incomplete in that the slots for some functions are initialized to zero. As a side benefit, this also saves space in the binary files. Descriptors for each vtable are created during compilation and contain information necessary for fully resolving information in the vtables at program load time. Descriptors are placed in the static data area.

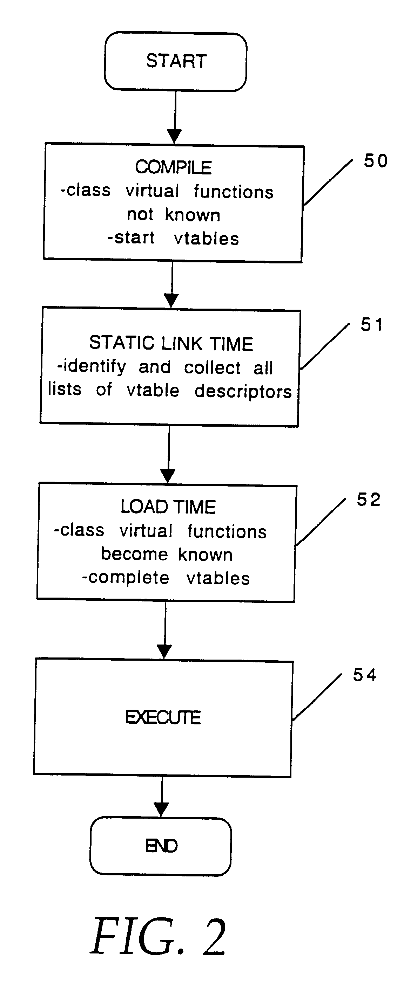

Figure **2** is a flowchart of the overall process of compiling, linking, loading and executing files using the present invention. At compile time **50**, the class virtual functions may not be known and therefore complete vtables cannot be formed. Basic structures, however, regarding classes, functions, offsets, and vtables can be created. At Static Link Time **51**, all of the lists of vtable descriptors are identified, and collected up, in a manner analogous to the way that static constructors are handled.

At Load Time **52**, prior to the execution of static constructors, class virtual functions become known, and vtables are completed. All uninitialized vtable slots, which correspond to functions whose implementation is inherited from a base class, are set to dispatch to the same function as the corresponding slot in the base class vtable. If a base class vtable contains slots for functions that are not present in a derived class vtable, the derived class vtable will be expanded to contain the added slots. The code can then be executed **54**, using the vtables to access all functions of a given class.

### Vtables

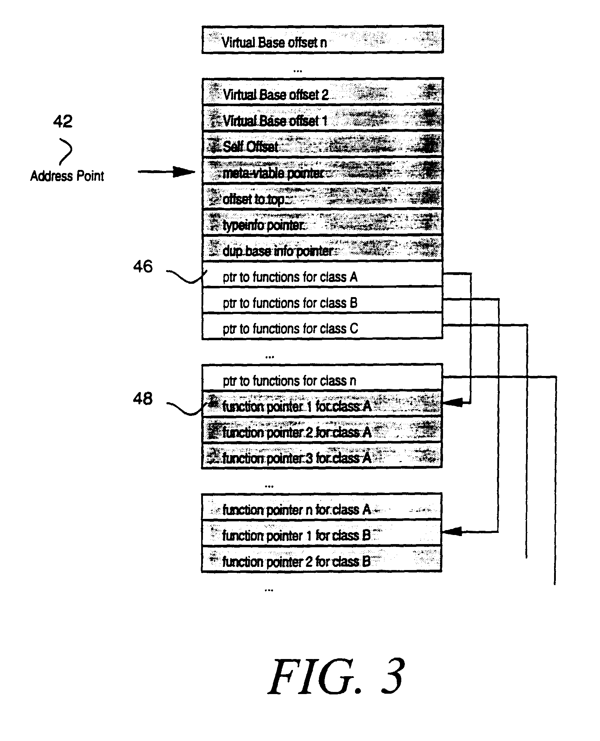

Vtables are used to dispatch virtual functions, to access virtual base class subobjects, and to access information for runtime type identification (RTTI). Each class that has virtual member functions or virtual bases has an associated set of vtables. The vtable pointers within the objects (instances) of a class point to the same set of vtables. Figure **3** is a block diagram showing the overall construction of a virtual table used in implementing the release-to-release binary compatibility system and method of the present invention. The vtable organization which implements the present RRBC system and method utilizes displacement fields that locate the first virtual function for each class that contributes to the vtable. As shown in Figure 3, address point 42 points to meta-vtable pointer. The pointers to functions of classes A, B, C,... n are shown generally by **46**. The pointer to function classes points to further pointers to individual functions, indicated generally at **48**. The other information shown in Figure 3 is relevant to the implementation of vtables in general.

A derived class inherits a copy of the virtual function tables associated with its direct base classes. Also, a derived class that introduces a virtual function member either has an additional virtual function table or shares one of the inherited virtual function tables. A class is said to introduce a virtual function member if there are no other virtual function members of the same name and type in the base class. Such a derived class shares the virtual function table members with its primary base class, for example the first non-virtual base class with an associated virtual function table that is visited in a depth first, left to right traversal of the inheritance tree, if such a base class exists. Otherwise, the derived class has its own virtual function table. The derived class shares a virtual function table member by appending the members for the function members introduced in the derived class to the shared table.

"Virtual base offsets" are used to access the virtual bases of an object. Each entry is a displacement to a virtual base subobject from the location within the object of the vtable pointer that addresses this vtable. These entries are only necessary if the class directly or indirectly inherits from virtual base classes. The values can be positive or negative.

"Meta-vtable pointer" makes the vtable look like an object. Each vtable has this pointer to its own vtable to allow debuggers to access runtime type information about the vtable.

"Typeinfo pointer" points to the type_info object used for RTTI. All entries in each of the vtables for a given class point to the same type_info object.

"Offset to top" holds the displacement to the top of the complete object from the location within the object of the vtable pointer that addresses this vtable. A negative value indicates the vtable pointer is part of an embedded base class subobject; otherwise it is zero. The offset provides a way to find the top of the complete object from any base subobject with a vtable pointer.

"Ptr to Functions for class" point to each segment of the vtable.

"Duplicate base information pointer" points to a table used to apply local inforation about the class hierarchy to dynamic casts to private and/or duplicate base classes. The entries in each of the vtables for a given class do not all point to the same table of duplicate base information and/or supplies covariant return information.

"Function pointers" are used for virtual function dispatch. Each pointer holds either the address of a virtual function of the class, or the address of an adjustor thunk that performs certain adjustments before transferring control to a virtual function.

A "vtable pointer" in an object addresses the meta-vtable pointer field of a vtable. This location is known as the address point of the vtable. Note that the virtual base offsets are at negative displacements from the address point.

### Virtual Function Calls

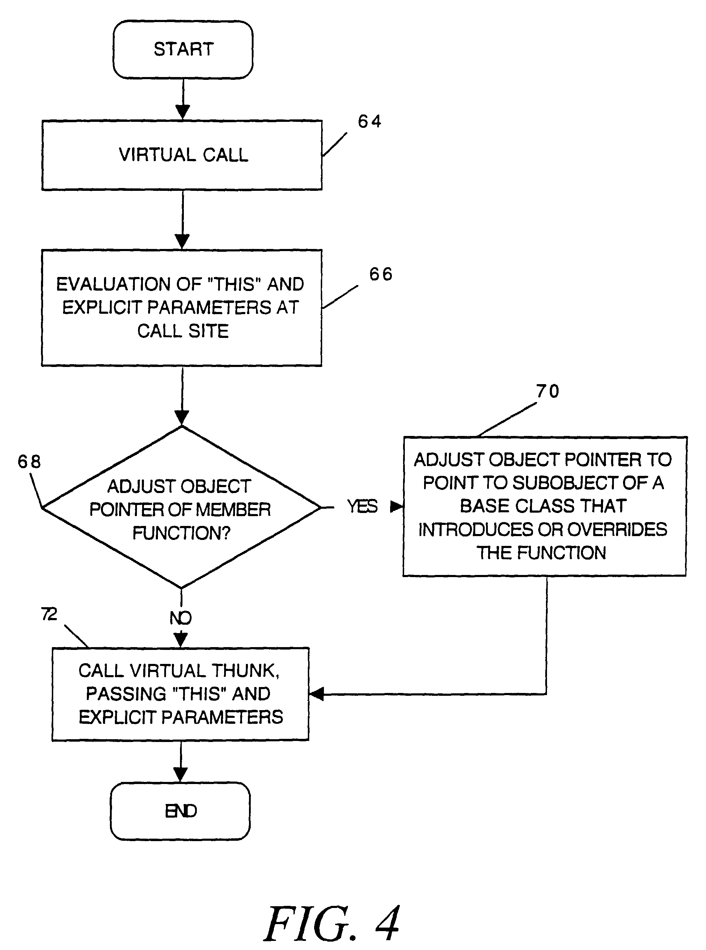

Figure **4** shows the overall flow of a virtual function call **64**. A virtual function call **64** is implemented by code in two - sometimes three - places: at the call site, in a virtual call thunk, and (possibly) in an adjustor thunk. At the virtual call site, explicit parameters for the virtual call are evaluated; the implicit "this" parameter is evaluated **66**, which might require **68** adjustment of the member function's object pointer so that it points to the subobject of a base class that introduces or overrides the function **70**; and a virtual call thunk is called, passing the "this" parameter and the explicit parameters **72**.

### Virtual Call Thunks

Virtual function dispatching uses virtual call thunks to take out-of-line the accessing and dereferencing of the vtables. The various offsets and displacements required by the thunks are fully known at compile time, allowing the compiler to generate them as ordinary functions.

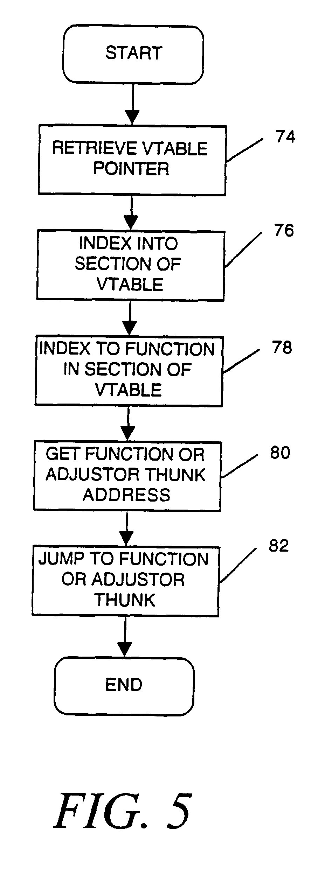

Figure **5** shows the overall performance of a virtual call thunk: 1) Retrieve the vtable pointer from the object that "this" points to **74**. 2) Index to the section of the vtable that contains the entries for the class that introduced the function **76**. 3) Index to the appropriate function entry within the vtable section **78**, to get the function or adjustor thunk address **80**. 4) Jump to the function or adjustor thunk **82**.

The following are examples of virtual call thunk implementations on Intel and PowerPC (PPC).

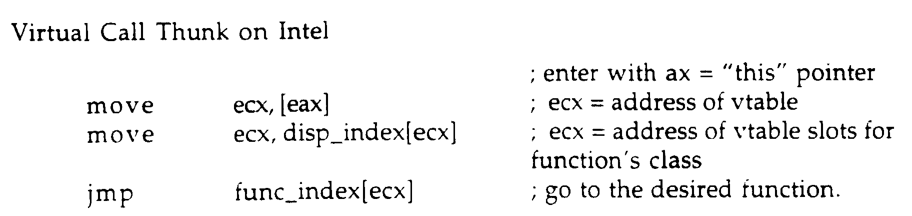

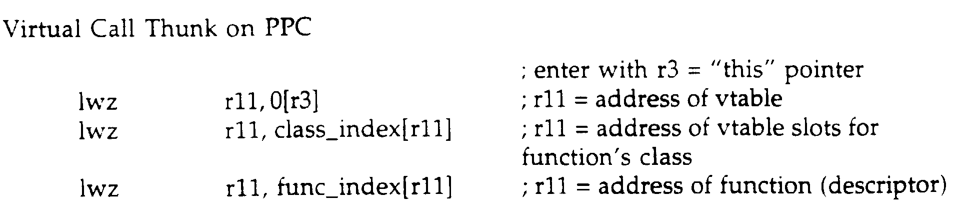

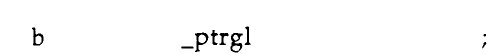

Virtual call thunks are ordinary code and require no unusual fixups during linking or loading. The traditional approach of inserting the virtual call code in-line at the call site is fully compatible with the present RRBC scheme. By placing the code out of line there is an overall reduction in code size.

### Format of a Vtable Descriptor

A vtable descriptor is a struct in the static data area that contains information needed to complete a vtable. The compiler will generate a vtable descriptor for each vtable it emits.

A vtable descriptor includes the following information:
1) The address of the vtable. All references to a vtable's address from code (typically constructors and destructors) will be made utilizing this pointer, which allows the vtable to be moved to another location should the addition of virtual functions cause the vtable to grow larger than the preallocated space.
2) An array of pointers to the descriptors for the source vtables to be used to complete this vtable. This array will be empty for classes that have no base classes.
3) A flag indicating whether this vtable is the primary vtable for the class.
4) A flag indicating whether this vtable is for a virtual base of the class.
5) If this descriptor is not for the primary vtable of the class, a pointer to the primary vtable for the class.
6) The number of segments in this vtable.
7) The number of Virtual Base Locators in this vtable.
8) For virtual base Vtables only, an array of pointers to the descriptors for locator vtables. This array corresponds to and parallels the array of source vtables.

### Locator Vtables

A locator vtable is associated with each source vtable needed for the construction of a vtable for a virtual base. Locator vtables are used in the calculation of "this" pointer adjustments for insertion into adjustor thunks. Let the source class be the class that a source vtable is for. For example, if the source is an A in B vtable, the source class is B. Let the destination class be the class that the vtable we are building is for. The locator vtable is the "source class in destination class" vtable.

The primary vtable for the source class is accessible through the primary vtable pointer of the source vtable. This primary vtable and the locator vtable have the same organization of their virtual base locators, which provides sufficient information to map offsets in the source class to offsets in the destination class.

### Format of a Partial, or Incomplete Vtable

A partial vtable has the same format as a complete vtables, except that: any function pointer slot whose contents should be copied from a source vtable is initialized to zero. The only slots given non-zero contents are those for virtual functions that are introduced or overridden in the complete class to which this vtable belongs. Also, the pointers to the sections in the vtable for the functions from each class are offsets rather than pointers. Offset is relative to the address point of the vtable. The intent is to avoid introducing numerous relocation records into the load file.

On Intel processors, these could simply be left as offsets at runtime with no penalty. On PPC, however, leaving them as offsets rather than pointers would bloat the virtual call thunks, requiring both an extra instruction and an additional scratch register.

### Format of a Vtable Descriptor list

The compiler emits a zero terminated array of pointers to the vtable descriptors into static data. It also emits a call to the function
void RrbcInit(void *descriptorArray); as the first static initialization item for each compilation unit containing vtables needing initialization.

### Adjustor Thunks

An adjustor thunk is needed whenever a "this" pointer must be adjusted after going through the virtual call thunk. The situation occurs whenever a derived class overrides a virtual function inherited from either a virtual or non-leftmost base class. Put another way, an adjustor thunk is a code fragment that intercepts control during a virtual call after the actual function is determined, but before it is entered, for the purpose of adjusting the "this" pointer to the position within the object. Most adjustor thunks will be generated by the compiler. In some cases, however, additional adjustor thunks are synthesized at load time, when vtables are constructed.

The RRBC system and method of the present invention generates adjustor thunks at load time for virtual functions that meet these conditions: 1) The function is introduced in a virtual base. 2) It is overridden by an intermediate class in the hierarchy. 3) It is not overridden by the complete class (or other intermediate classes further down from the class of step 2). Adjustor thunks are also used in non-virtual multiple inheritance class hierarchies, when a function introduced by a non-primary base is overridden. These thunks do not need to be altered by the RRBC system because the position relationship between the base and the derived class is not altered when the derived class is used as a base for further inheritance.

The RRBC system is compatible with existing C++ implementations that store "this" pointer adjustments in the VTable rather than using adjustor thunks. For these implementations, the new adjustment value is placed into the Vtable entry rather than into an adjustor thunk.

The following example demonstrates a situation where the RRBC system must generate a new adjustor thunk:

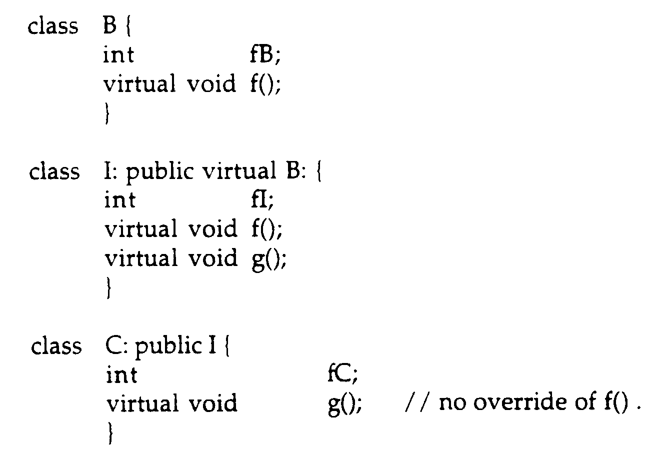

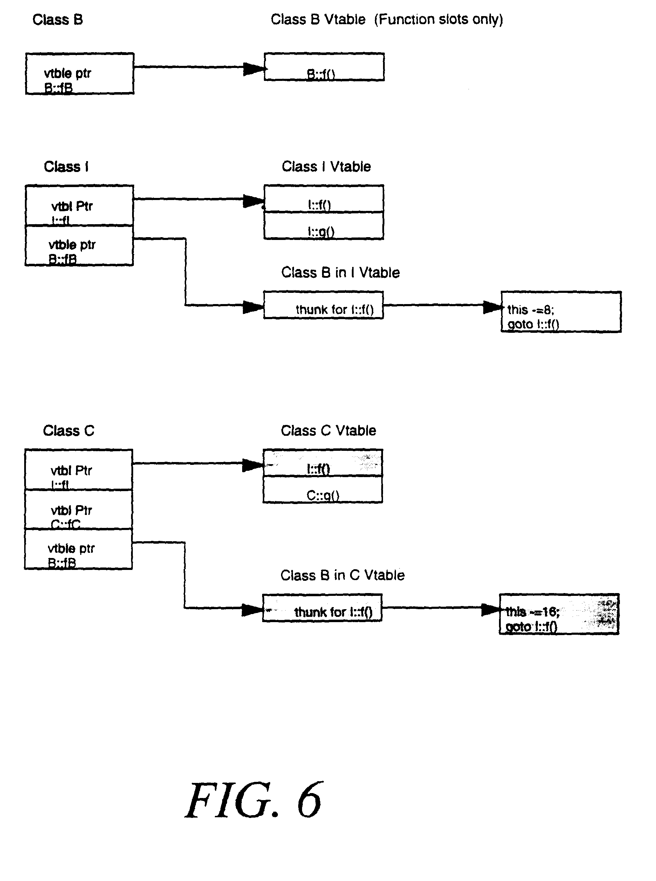

Figure **6** shows development of vtables for several classes which results in generation of an adjustor thunk. As can be seen in the vtable for Class I, the thunk and vtable entry for B in I are emitted directly by the compiler. No load time fix ups are needed. Tinted items in Figure **6** are left uninitialized by the compiler, and filled in at load time. The thunk generated by the compiler for class I can not be used in class C because the "this" adjustment is different.

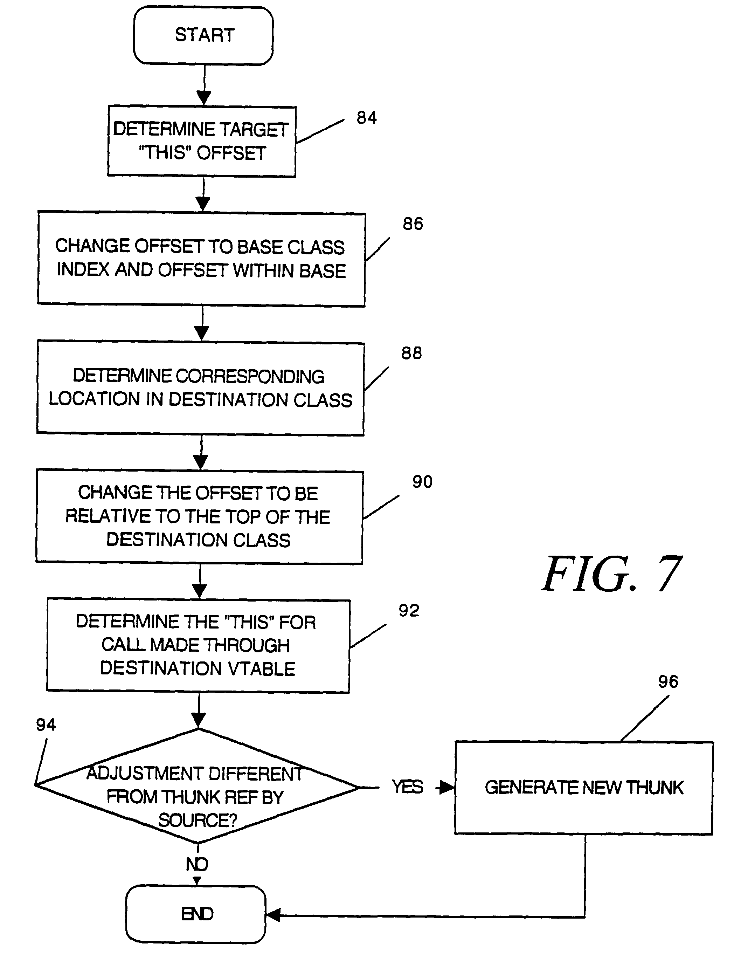

The following is the algorithm used to determine the required "this" pointer adjustment for an adjustor thunk generated at load time. Several definitions for the algorithm should be kept in mind. "Source class" refers to the class that the source vtable is for. For example, if the source is an A in B vtable, the source class is B. "Source class vtable" refers to the primary vtable for the source class. "Destination class" refers to the class that the vtable built is for. For example, if building an A in C vtable, the destination class is C. "Destination vtable" refers to the vtable that being built, the one whose slots are being filling with contents derived from the source vtable. Figure 7 is a flowchart showing the steps of an algorithm in accordance with a preferred embodiment.
1) For the slot in the source vtable, determine the target "this" offset within a source object, by adding the source vtable offset-to-top and the adjustor thunk value, if any. Step **84**.
2) Change the above offset to a base class index, and an offset within that base, for the source class. Base classes are identified by scanning the virtual base locators of the source class vtable. The correct virtual base locator is the largest one that is less than or equal to the offset from step 1. Step **86**.
3) Determine the corresponding location within the destination class, relative to the address point for the locator vtable. This will be: locator vtable.virtual base locators[index from step 2] + offset from step 2. The locator vtable is the "source class in destination class" vtable. Step **88**.
4) Change the above offset to be relative to the top of the destination class, by adding the locator vtable's offset-to-top. Step **90**.
5) Determine the "this" adjustment for a call made through the destination vtable, which is the desired offset within the destination class (from step 4) - the offset-to-top from the destination vtable. Step **92**.
6) If the this adjustment is different from that in the thunk referenced by the source vtable, a new thunk will be required. Step **94 & 96**.

### Covariant Return Handling

Adjustor thunks are involved in the implementation of Covariant Return types for member functions. Extra parameters, supplied by the adjustor thunk, are passed to the member function with the covariant return, and are used, just prior to the function's return, to cast the pointer being returned.

This technique has only a minimal interaction with the RRBC mechanisms. When the RRBC system generates a new adjustor thunk, as described in the previous section, if the source vtable slot pointed to an adjustor thunk, and that adjustor thunk provided covariant return parameters, then the new adjustor thunk must provide the identical covariant return parameters.

In no case must the RRBC system alter the covariant return adjustments that were initially provided by the compiler. This is because the return cast is always an up-cast from a derived type, as returned by the overridden virtual function, to a base, as specified at point that the virtual function was introduced (or perhaps at an intermediate override), and up-casts can always be done correctly without knowing the full derived type of the object being cast. Casts to non-virtual bases involve a constant offset, and casts to virtual bases make use of the virtual base locators.

The following example illustrates classes that will cause the RRBC system to generate an adjustor thunk, including covariant return adjustments.

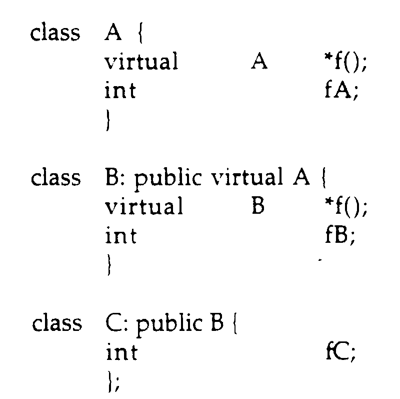

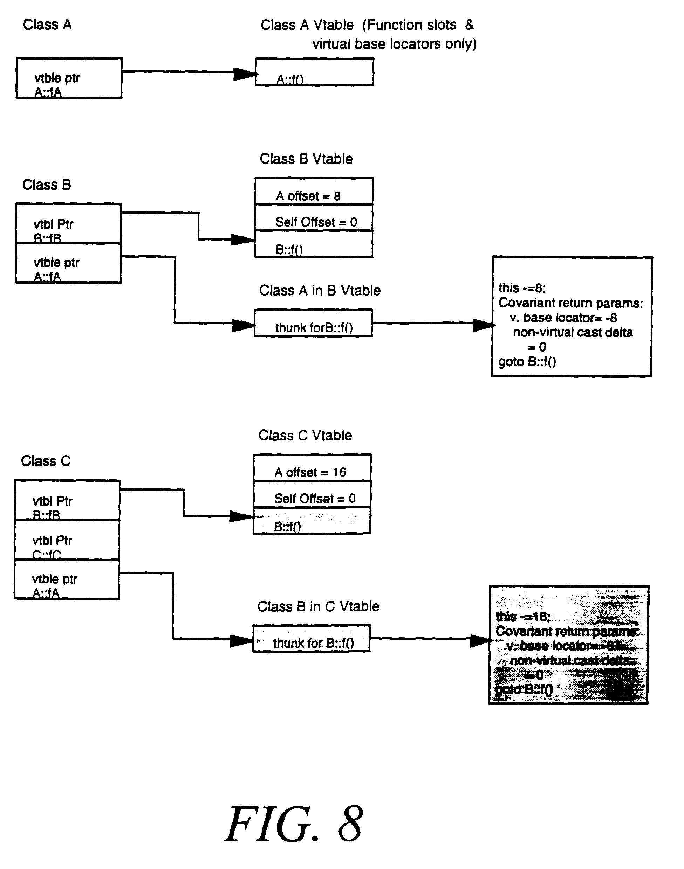

Figure 8 shows an example of generation of an adjustor thunk, including covariant return adjustments. The thunk and vtable entry for B in A are emitted directly by the compiler. No load time fix ups are needed. Tinted items in Figure 8 are left uninitialized by the compiler, and filled in at load time.

The thunk generated by the compiler for class B can not be used in class C because the "this" adjustment is different. The Covariant Return Parameters are copied from the thunk for A in B without modification.

In Figure 8, when entering B::f() through either of the two adjustor thunks:
1) The exact type of the "this" object is known, because the thunk was obtained via the vtable for the object.
2) The thunk is doing a downcast of "this", from a B * or C * to an A *. Because each thunk will see exactly one object type, the cast can be done by adding a constant offset to "this"

When exiting B::f() after an entry through either of the thunks: 1) The actual type of the object being returned is not known - it could be a B, or a C, or any other type derived from B, including ones never seen before. 2) The function must do an up cast, based on the parameters supplied by the thunk, from a B * supplied by the function's return statement to an A * expected by the call site. All classes derived from B will have a virtual base locator for A in their vtable for B at offset -8.

### Dominance

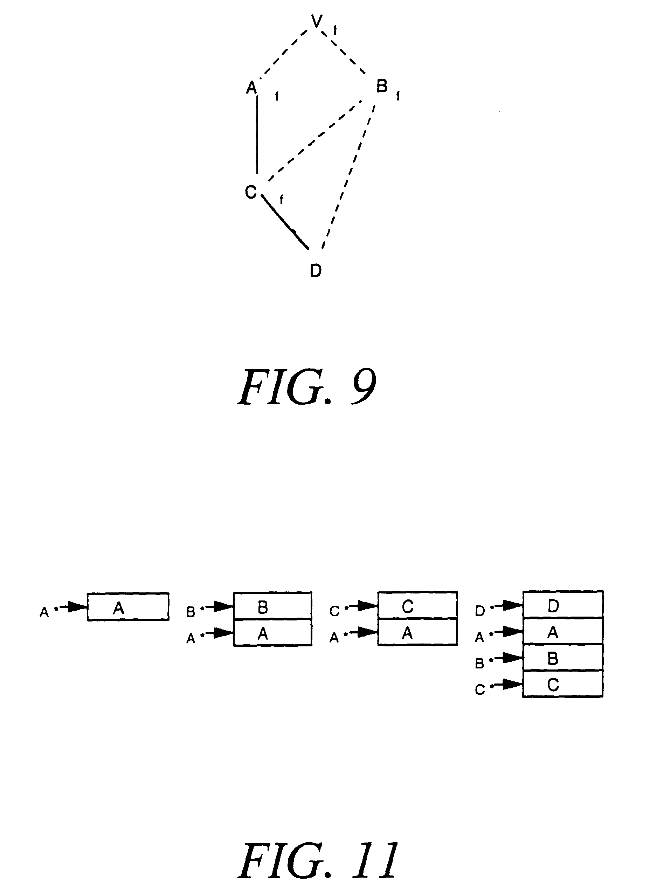

Dominance is a rule for resolving names that can be reached by multiple paths through the inheritance hierarchy of a class. The rule is of importance here because the dominance rule must be applied when determining which overrides apply to a virtual function introduced in a virtual base - a task that must be performed at load time. The basic dominance rule for virtual function overrides is that function B::f() will override function A::f() if class B has A as a base. The same rule applies to member names in general. In the example shown in Figure 9, C::f() dominates over B::f() because B is a base of C. Dashed lines in the drawing represent virtual inheritance.

Likewise, C::f() dominates over A::f() because A is a base of C.

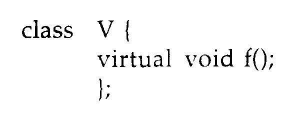

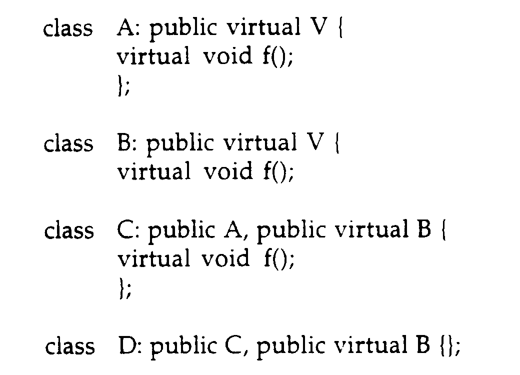

At load time, in the example, the RRBC system will need to initialize the contents of a V in D vtable. The compiler will have emitted these vtables, for class V in classes B, C and D (ignoring adjustor thunks):

| **name** | **sources** | **initial contents** | **final contents** |
|---|---|---|---|
| V | none | V::f() | V::f() |
| V in B | V | B::f() | B::f() |
| V in C | V | C::f() | C::f() |
| V in B in D | V in B | 0 | B::f() |
| V in C in D | V in C | 0 | C::f() |
| V in D | V in B in D, | 0 | C::f() |
| | V in C in D | | |

Dominance rules come into play because the V in D vtable has two sources, the V in B in D and the V in C in D vtables.

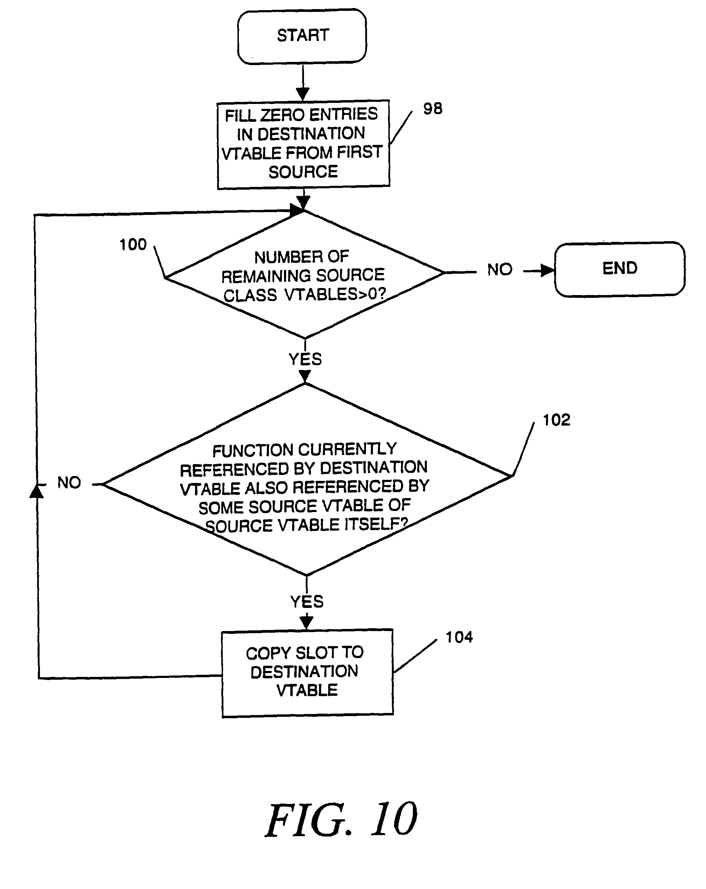

Figure 10 shows the steps for filling such a vtable:
1) Fill zero entries in the destination vtable from the corresponding slots in the first source vtable in the usual way **98**.
2) For each of the remaining source class vtables **100**, copy a slot **104** to the destination vtable only if the function currently referenced by the destination vtable slot is also referenced by the corresponding slot in some source vtable, direct or indirect, of the source vtable **102**. This is effectively walking back up the hierarchy to check whether the new candidate override is from a class that descends from the class that provided the override already provided for this slot.

It should be noted that Figure **10** is a general flowchart of overall operation. Details regarding the particular number of remaining source class vtables, and checking currently referenced functions is not shown. When determining whether two vtable slots refer to the same function, comparing values is not sufficient. What matters is the eventual target function, not any adjustor thunks or shared library linkages that may intervene.

### Vtables and Vtable Descriptors Example

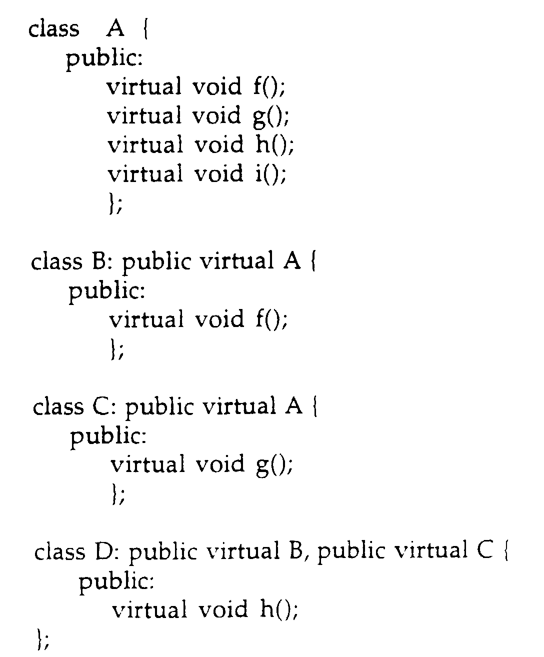

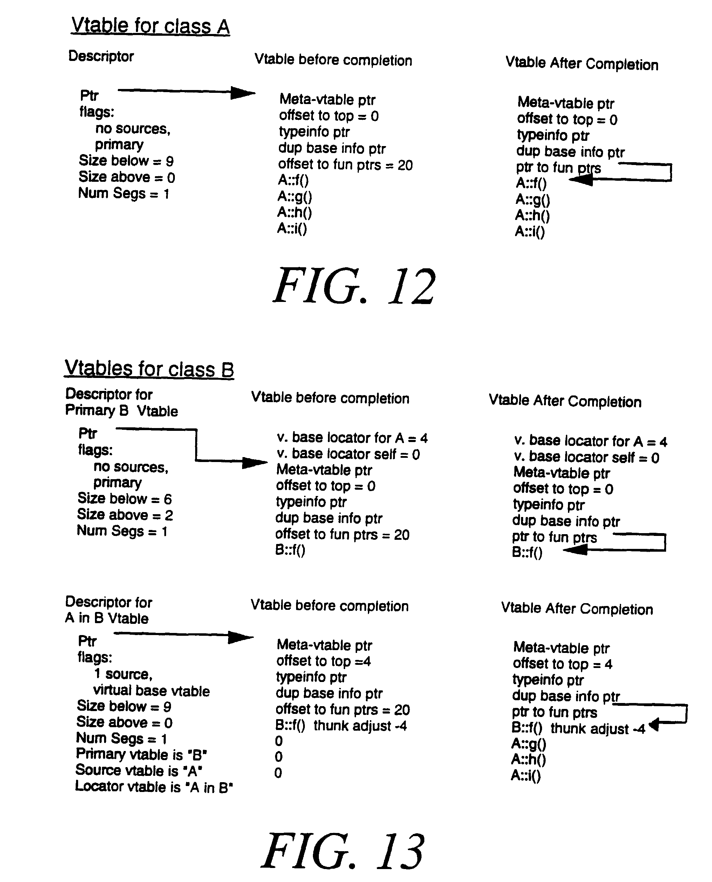

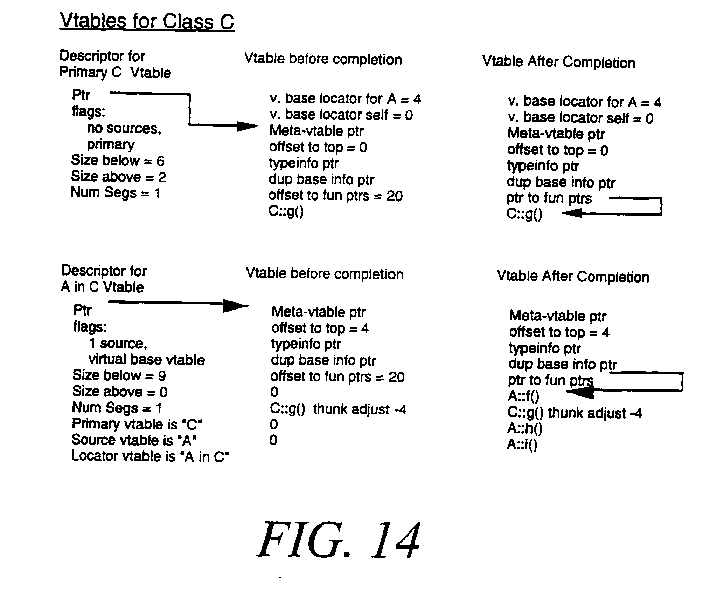

Figure **11** shows a block diagram of a layout of instances of classes A, B, C and D. All classes shown are virtual. Figures **12, 13, 14, 15** and **16** illustrate vtables for the above example. The figures demonstrate descriptors, and the incomplete and completed vtables for each class.

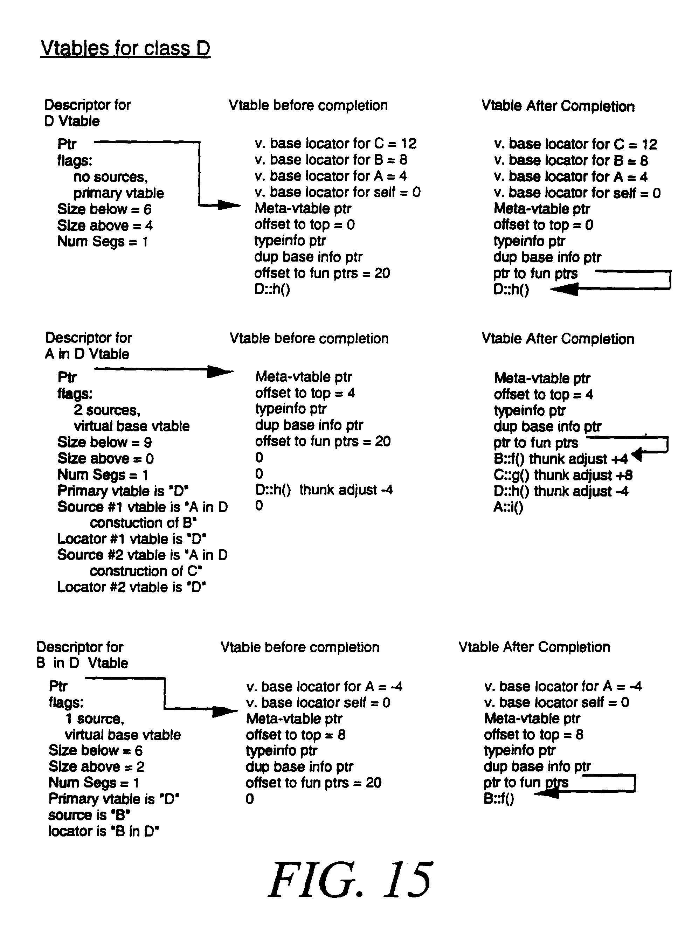

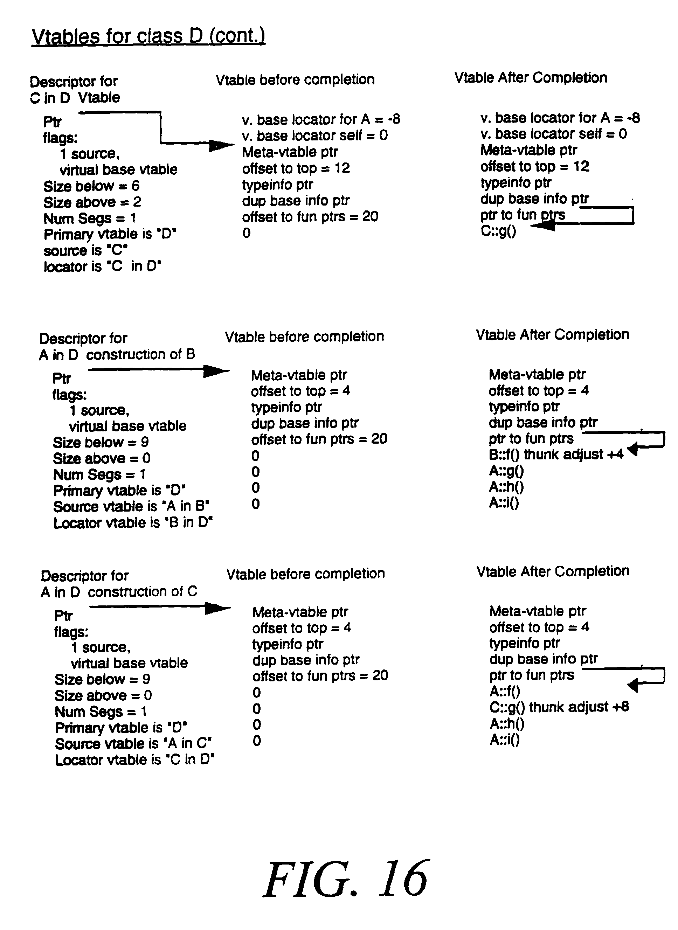

Note with respect to Figure 15, the B in D vtable is utilized during the construction of B in D objects. Because no functions in this vtable are overridden by class D, a separate construction vtable is not needed. Note with respect to Figure **16**, the C in D vtable is also used during the construction of C in D objects. Because no functions in this vtable are overridden by class D, a separate construction vtable is not needed. Also note with respect to Figure **16** that the A in D construction of B vtable is an A in D, for use during the construction of a B in D. It contains overrides to virtual functions introduced in class A that came from class B, but not those from classes C or D.

Finally, note that with respect to Figure **16**, that the A in D construction of C vtable is an A in D, for use during the construction of a C in D. It contains overrides to virtual functions introduced in class A that came from class C, but not those from classes B or D.

### Adjustor Thunk Offset Computations Examples

### Example 1

The f() slot in the "A in D, construction of B" vtable of Figure 16.

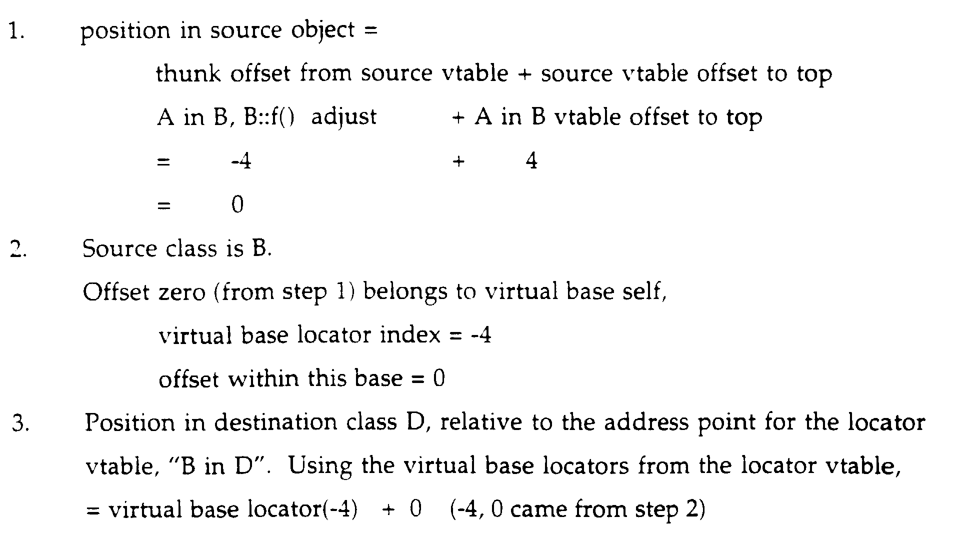

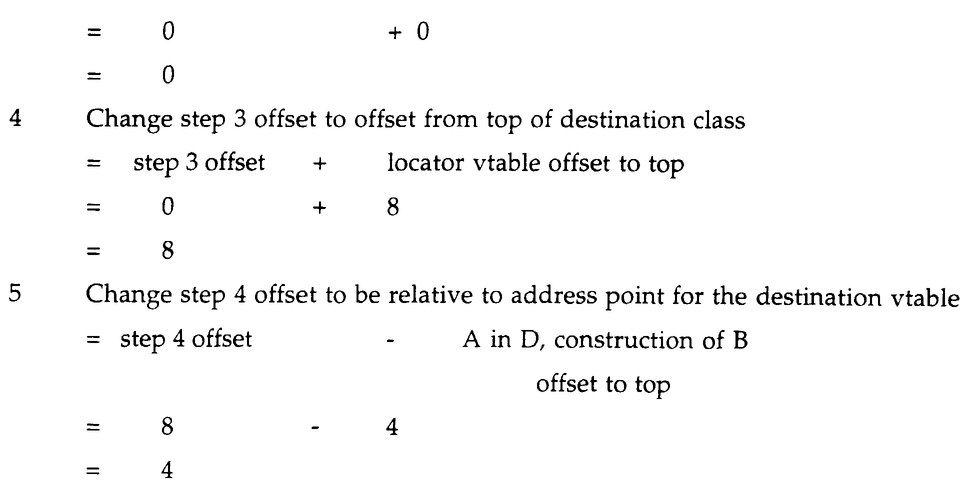

### Example 2

The f() slot in the "B in D" vtable. This is a degenerate case; B::f() should be copied from source to destination with no this adjustments required.

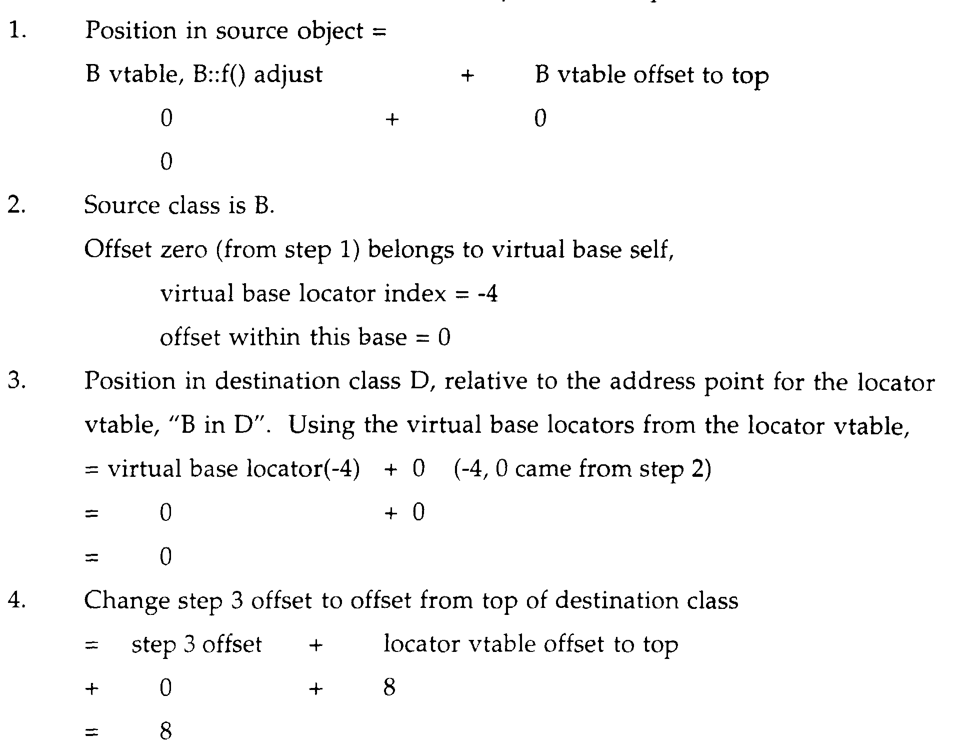

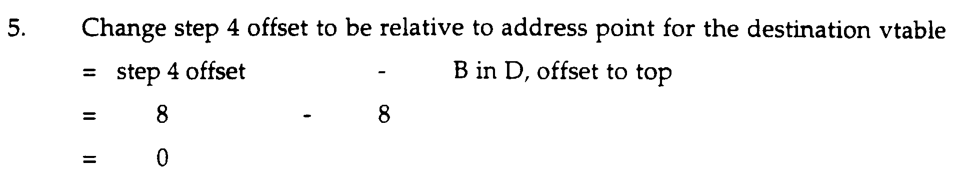

### Example 3

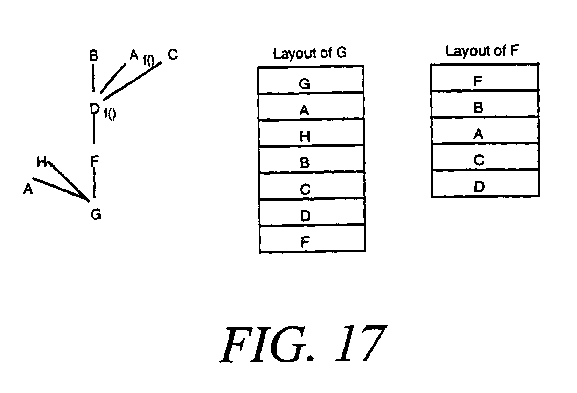

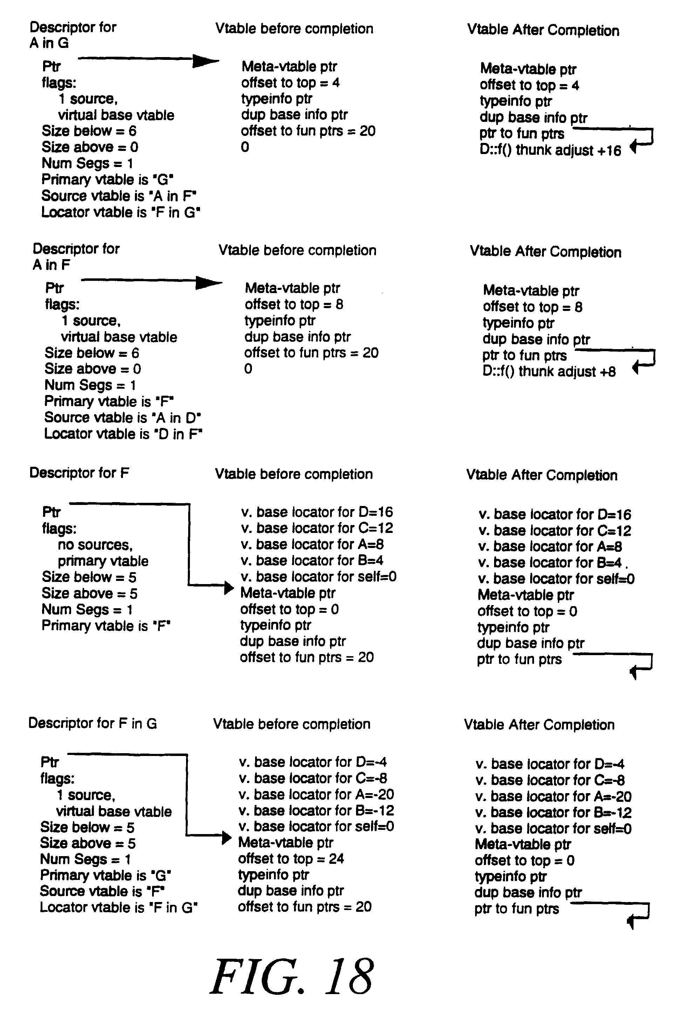

A more complex example. Figure 17 is a block diagram showing the inheritance structure of the classes, and layouts of G and F. Figure 18 shows the descriptors, and incomplete and complete vtables for the example. Virtual function f() is introduced in class A, overridden in class D, and inherited from D by classes F and G. Consider the construction of the A in G vtable. The source vtable for building "A in G" is "A in F." The locator vtable is "F in G."

The calculation of the adjustment for the D::f() entry in the "A in G" vtable is as follows:

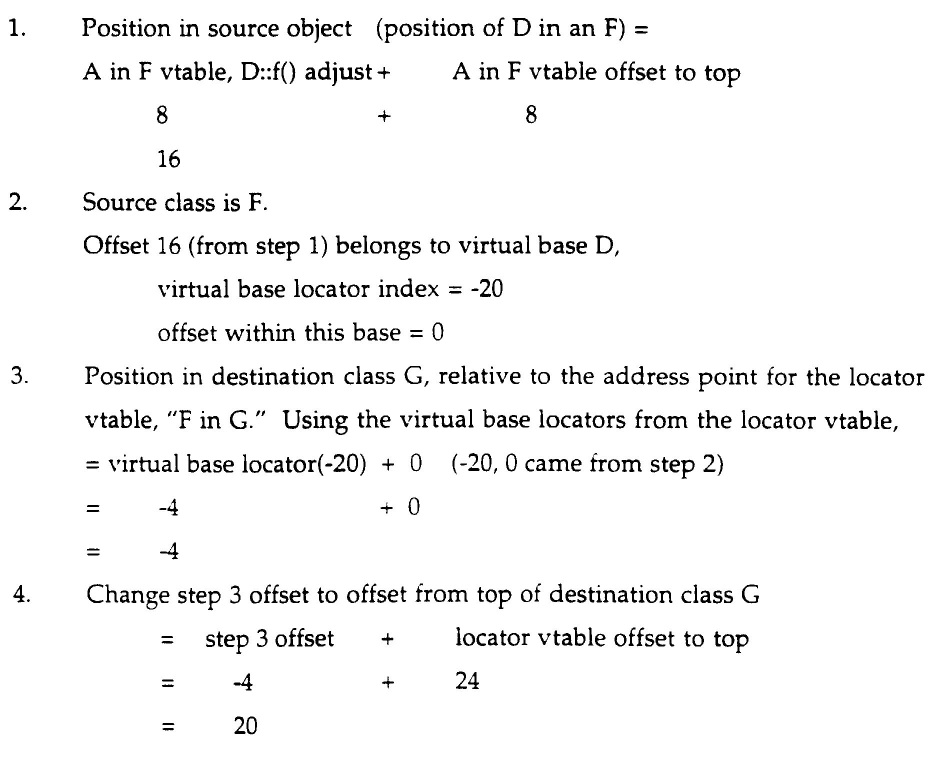

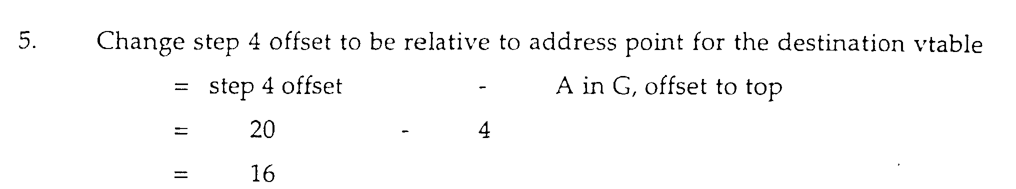

### Additional Embodiment

One of the requirements of RRBC is to move a virtual function up the class hierarchy - to move the function to a base of the original introducing class. Doing so will, at a minimum, move the function's entry to a different part of the same vtable, and can, in classes with multiple vtables, move it to a different vtable altogether. There may, however, exist client code that was compiled with the old declarations and therefore have hardwired into it the original vtable location for the function. There are two possible solutions to the problem of keeping a vtable entry at the original location:
1. Have every override of a virtual function cause an entry to be added to the vtable of the class doing the override. When a class is moved up the hierarchy, an override could be left in the former introducing class, which would cause an appropriate vtable entry to be produced. The disadvantage of this scheme is that the storage required for vtables would grow significantly, since every override would require an additional vtable slot.
2. Introduce a #pragma or some other mechanism to flag the original introduction points of virtual functions that have been moved up the class hierarchy. Then only these functions would need replicated entries within the same vtable, and, as their numbers should be fairly small, the storage hit should be statistically negligible.

While the invention has been described in terms of a preferred embodiment in a specific system environment, those skilled in the art recognize that the invention can be practiced, with modification, in other and different hardware and software environments within the scope of the appended claims.

## Claims

1. A method for use in a computer system (Fig. 19) to generate a virtual function table at runtime for a compiled derived class which is derived from a base class and has at least one virtual member function with associated executable code, the method generating at compile time from source code statements, a virtual function table for the base class (Fig. 12), the base class virtual function table containing executable code addresses (Fig. 12, A::f() - A::i()), CHARACTERIZED IN THAT the method comprises the steps of:
a. generating at compile time (50) from source code statements, an incomplete virtual function table (58) for the derived class (Fig. 13), the derived class virtual function table (58) containing a slot (Fig. 13, B::f()) for each virtual member function of the derived class known at compile time;
b. initializing at compile time (50) each derived class virtual function table slot corresponding to a virtual member function introduced or overridden in the derived class with an executable code address (B::f());
c. creating at compile time (50) from source code statements, a virtual function table descriptor (60) for the base class and for the derived class, the derived class virtual function table descriptor containing, for each virtual function table slot corresponding to a virtual member function inherited from the base class, a source pointer (Fig. 13, Source vtable is "A") pointing to the base class virtual function table descriptor;
d. expanding the derived class virtual function table (slots initialized as 0s) to contain slots for virtual member functions found in the base class virtual function table descriptor that were not present in the base class virtual function table at compile time; and
e. initializing at runtime (52) each derived class virtual function table slot corresponding to a virtual member function that was inherited from the base class from an executable code address in the base class virtual function table (Fig. 12, A::g()-A::i()).

2. The method as recited in claim 1 wherein the derived class includes virtual member functions inherited from a third class and wherein step a comprises the steps of:
a1. creating a first derived class virtual function table segment (48, Fig.3) containing slots holding virtual function pointers to functions inherited from the base class;
a2. creating a second derived class virtual function table segment (Fig. 3, function pointer 1 for class B ...) containing slots holding virtual function pointers to functions inherited from the third class; and
a3. creating a plurality of segment pointers (46, ptr to functions for class A...) in the derived class virtual function table, each of the plurality of segment pointers pointing to one of the first and second derived class virtual function table segments.

3. The method as recited in claim 2 further including the step of:
f. locating the base class virtual function table descriptor with the source pointer.

4. The method as recited in claim 3 wherein step d includes the step of:
d1. adjusting the plurality of segment pointers to expand at least one of the derived class virtual function table segments.

5. The method as recited in claim 1 further including the steps of:
g. accessing at runtime a virtual member function with the derived class virtual function table by accessing one of the plurality of table segments with the segment pointers and computing a slot offset within the accessed table segment.

6. The method as recited in claim 1, further including the step of:
h. accessing at runtime a virtual member function with the derived class virtual function table by using the contents of a derived class virtual table slot as an index to access the virtual member function executable code.

7. The method as recited in claim 6 further including the step of:
i. adjusting at runtime the index when the derived class virtual table is adjusted.

8. The method as recited in claim 1 further including the steps of:
j. generating at compile time a locator virtual table; and
k. adjusting at runtime a "this" pointer for each virtual function utilizing the locator virtual table.

9. Apparatus for use in a computer system (Fig. 19) with a memory to generate a virtual function table in the memory at runtime for a compiled derived class which is derived from a base class and has at least one virtual member function with associated executable code in the memory at predetermined address, the computer system further including means responsive to source code statements for generating in the memory at compile time a virtual function table (Fig. 12) for the base class, the base class virtual function table containing executable code addresses (Fig. 12, A::f() - A::i()), CHARACTERIZED IN THAT the apparatus comprises:
a. means (50) responsive to source code statements, for generating in the memory at compile time an incomplete virtual function table (58) for the derived class (Fig. 13), the derived class virtual function table containing a slot (Fig. 13, B::f()) for each virtual member function of the derived class known at compile time;
b. means (50) for initializing at compile time each derived class virtual function table slot corresponding to a virtual member function introduced in the derived class by storing an executable code address (Fig 13, B::f()) in the slot;
c. means (50) for creating in the memory at compile time a virtual function table descriptor (60) for the base class at a base class descriptor address and for the derived class at a derived class descriptor address, the derived class virtual function table descriptor containing, for each virtual function table slot corresponding to a virtual member function inherited from the base class, a source pointer (Fig. 13, Source vtable is "A") pointing to the base class descriptor address; and
d. means for expanding the derived class virtual function table (Fig. 13, slots initialized as 0s) to contain addresses for executable code corresponding to virtual member functions found in the base class virtual function table descriptor that were not present in the base class virtual function table at compile time; and
e. means (52) for initializing at runtime each derived class virtual function table slot corresponding to a virtual member function that was inherited from the base class by storing therein an executable code address (Fig. 12, A::g()-A::i()) obtained from the base class virtual function table.

10. Apparatus as recited in claim 9 wherein the derived class includes virtual member functions inherited from a third class and wherein the derived class virtual table generating means comprises:
means (48, Fig. 3) for creating in the memory a first derived class virtual function table segment containing slots holding virtual function pointers to executable code addresses of functions inherited from the base class ;
means for creating a second derived class virtual function table segment (Fig. 3, function pointer 1 for class B...) containing slots holding virtual function pointers to executable code addresses of functions inherited from the third class; and
means for creating a plurality of segment pointers (46, ptr to functions for class A) in the derived class virtual function table, each of the plurality of segment pointers pointing to an address in memory of one of the first and second derived class virtual function table segments.

11. Apparatus as recited in claim 10 further including:
means for locating the base class virtual function table descriptor with the source pointer.

12. Apparatus as recited in claim 11 wherein the expanding means comprises:
means for adjusting the plurality of segment pointers to expand at least one of the derived class virtual function table segments.

13. Apparatus as recited in claim 9 further including:
means for accessing at runtime a virtual member function with the derived class virtual function table by accessing one of the plurality of table segments with the segment pointers and computing a slot offset within the accessed table segment.

14. Apparatus as recited in claim 9, further including:
means for accessing at runtime a virtual member function with the derived class virtual function table by using the contents of a derived class virtual table slot as an index to access the virtual member function executable code.

15. Apparatus as recited in claim 14 further including:
means for adjusting at runtime the index when the derived class virtual table is adjusted.

16. Apparatus as recited in claim 9 further including:
means for generating at compile time a locator virtual table; and
means for adjusting at runtime a "this" pointer for each virtual function utilizing the locator virtual table.

## Patentansprüche

1. Ein Verfahren zur Benutzung in einem Computersystem (Fig. 19) zum Erzeugen einer virtuellen Funktionstabelle zur Laufzeit für eine kompilierte abgeleitete Klasse, die von einer Basisklasse abgeleitet ist und wenigstens eine virtuelle Mitgliedsfunktion mit damit verbundenem ausführbarem Code aufweist, das Verfahren erzeugt zur Kompilierzeit aus Quellencode Anweisungen eine virtuelle Tabelle für die Basisklasse (Fig. 12), die ausführbare Codeadressen (Fig. 12, A::f() - A::i()) enthält, dadurch gekennzeichnet, daß das Verfahren die Schritte umfaßt:
a. Erzeugen zur Kompilierzeit (50) aus Quellencode-Anweisungen eine unvollständige virtuelle Funktionstabelle (58) für die abgeleitete Klasse (Fig. 13), die eine Lücke (Fig. 13, B::f()) enthält für jede virtuelle Mitgliedsfunktion der abgeleiteten Klasse, die zur Kompilierzeit bekannt ist;
b. Initialisieren zur Kompilierzeit (50) jeder Funktionstabellenlücke der abgeleiteten Klasse entsprechend einer virtuellen Mitgliedsfunktion, die in die abgeleitete Klasse eingeführt oder mit einer ausführbaren Codeadresse überschrieben wird (B::f());
c. Erzeugen zur Kompilierzeit (50) aus den Quellencode-Anweisungen einen virtuellen Funktionstabellen-Descriptor (60) für die Basisklasse und für die abgeleitete Klasse, der virtuelle Funktionstabellen-Descriptor der abgeleiteten Klasse enthält für jede virtuelle Funktionstabellenlücke, die einer von der Basisklasse geerbten virtuellen Mitgliedsfunktion entspricht, einen Quellenzeiger (Fig. 13, Source vtable ist "A"), der auf den virtuellen Funktionstabellen-Descriptor der Basisklasse zeigt;
d. Erweitern der virtuellen Funktionstabelle der abgeleiteten Klasse (worin die Lücken als Nullen initialisiert sind) durch Lücken für virtuelle Mitgliedsfunktionen, die im Funktionstabellen-Deskriptor der Basisklasse gefunden werden und die zur Kompilierzeit in der virtuellen Funktionstabelle der Basisklasse nicht vorhanden waren; und
e. Initialisieren zur Laufzeit (52) jede Funktionstabellenlücke (58) der abgeleiteten Klasse entsprechend einer virtuellen Mitgliedsfunktion, die aus der Basisklasse von einer ausführbaren Codeadresse in der virtuellen Funktionstabelle der Basisklasse (Fig. 12, A::g() - A::i()) geerbt worden ist.

2. Das Verfahren nach Anspruch 1, worin die abgeleitete Klasse virtuelle Mitgliedsfunktionen enthält, die von einer dritten Klasse geerbt sind, und worin Schritt a die Schritte umfaßt:
a1. Erzeugen eines virtuellen Funktionstabellen-Segments einer ersten abgeleiteten Klasse (48, Fig.3), welche Lücken zur Aufnahme virtueller Zeiger zu Funktionen enthält, die von der Basisklasse geerbt sind;
a2. Erzeugen eines virtuellen Funktionstabellen-Segments einer zweiten abgeleiteten Klasse (Fig.3, Funktionszeiger 1 für Klasse B...), welche Lücken zur Aufnahme virtueller Zeiger zu Funktionen enthält, die von der dritten Klasse geerbt sind; und
a3. Erzeugen einer Vielzahl von Segment-Zeigern (46, Zeiger zu Funktionen für Klasse A...) in der virtuellen Funktionstabelle der abgeleiteten Klasse, jeder der Vielzahl von Segment-Zeigern zeigt zu einem der virtuellen Funktionstabellen-Segmente der ersten und zweiten abgeleiteten Klasse.

3. Das Verfahren nach Anspruch 2, weiter enthaltend den Schritt:
f. Lokalisieren des virtuellen Funktionstabellen-Deskriptors der Basisklasse mit dem Quellenzeiger.

4. Das Verfahren nach Anspruch 3, worin Schritt d den Schritt enthält:
d1. Anpassen der Vielzahl von Segement-Zeigern zum Erweitern von wenigstens einem der virtuellen Funktionstabellen-Segmente einer abgeleiteten Klasse.

5. Das Verfahren nach Anspruch 1, weiter enthaltend den Schritt:
g. Zugriff zur Laufzeit auf eine virtuelle Mitgliedsfunktion mit der virtuellen Funktionstabelle der abgeleiteten Klasse durch Zugreifen auf eines der Vielzahl von virtuellen Funktionstabellen-Segmenten mit den Segment-Zeigern und Berechnen einer Lückenversetzung innerhalb des Tabellensegments, auf das der Zugriff erfolgt ist.

6. Das Verfahren nach Anspruch 1, weiter enthaltend den Schritt:
h. Zugriff zur Laufzeit auf eine virtuelle Mitgliedsfunktion mit der virtuellen Funktionstabelle der abgeleiteten Klasse durch Benutzen des Inhalts einer virtuellen Funktionstabellenlücke der abgeleiteten Klasse als ein Index zum Zugriff auf den ausführbaren Code der virtuellen Mitgliedsfunktion.

7. Das Verfahren nach Anspruch 6, weiter enthaltend den Schritt:
i. Anpassen des Indexes zur Laufzeit, wenn die virtuelle Tabelle der abgeleiteten Klasse angepaßt wird.

8. Das Verfahren nach Anspruch 1, weiter enthaltend die Schritte:
j. Erzeugen einer virtuellen Lokatortabelle zur Kompilierzeit; und
k. Anpassen zur Laufzeit eines "dies" Zeigers für jede virtuelle Funktion, welche die virtuelle Lokatortabelle benutzt.

9. Einrichtung zur Benutzung in einem Computersystem (Fig. 19) mit einem Speicher zum Erzeugen einer virtuellen Funktionstabelle in dem Speicher zur Laufzeit für eine kompilierte abgeleitete Klasse, die von einer Basisklasse abgeleitet ist und wenigstens eine virtuelle Mitgliedsfunktion mit damit verbundenem ausführbarem Code auf einer vorbestimmten Adresse im Speicher aufweist, das Computersystem enthält weiter Mittel, die auf Quellencode-Anweisungen ansprechen, um zur Kompilierzeit im Speicher eine virtuelle Funktionstabelle für die Basisklasse (Fig. 12) zu erzeugen, die ausführbare Codeadressen (Fig. 12, A::f() - A::i()) enthält, dadurch gekennzeichnet, daß die Einrichtung umfaßt:
a. Mittel (50), die auf Quellencode-Anweisungen ansprechen, zum Erzeugen im Speicher zur Kompilierzeit einer unvollständige virtuelle Funktionstabelle (58) für die abgeleitete Klasse (Fig. 13) im Speicher zur Kompilierzeit, die virtuelle Funktionstabelle (58) für die abgeleitete Klasse weist eine Lücke (Fig. 13, B::f()) für jede virtuelle Mitgliedsfunktion der abgeleiteten Klasse auf, die zur Kompilierzeit bekannt ist;
b. Mittel (50) zum Initialisieren zur Kompilierzeit (50) jeder Tabellenlücke in der virtuellen Funktionstabelle der abgeleitete Klasse entsprechend einer virtuellen Mitgliedsfunktion, die in die abgeleitete Klasse eingeführt wird durch Speichern einer ausführbaren Codeadresse (B::f()) in der Lücke;
c. Mittel (50) zum Erzeugen im Speicher zur Kompilierzeit eines virtuellen Funktionstabellen-Deskriptors (60) für die Basisklasse auf einer Basisklassen-Deskriptor-Addresse und für die abgeleitete Klasse auf einer Deskriptor-Addresse der abgeleiteten Klasse, der virtuelle Funktionstabellen-Descriptor der abgeleiteten Klasse enthält für jede virtuelle Funktionstabellenlücke, die einer von der Basisklasse geerbten virtuellen Mitgliedsfunktion entspricht, einen Quellenzeiger (Fig. 13, Source vtable ist "A"), der auf den virtuellen Funktionstabellen-Deskriptor der Basisklasse zeigt; und
d. Mittel zum Erweitern der virtuellen Funktionstabelle der abgeleiteten Klasse (Fig. 13, die als Nullen initialisiert sind) durch Aufnahme von Adressen für ausführbaren Code, der einer virtuellen Mitgliedsfunktion entspricht, welche in dem virtuellen Funktionstabellen-Deskriptor der Basisklasse gefunden werden und zur Kompilierzeit in der virtuellen Funktionstabelle der Basisklasse nicht vorhanden waren; und
e. Mittel (52) zum Initialisieren zur Laufzeit jeder Funktionstabellenlücke der abgeleiteten Klasse entsprechend einer virtuellen Mitgliedsfunktion, die von der Basisklasse geerbt worden ist, durch Speicherung darin eine ausführbare Codeadresse in der virtuellen Funktionstabelle der Basisklasse (Fig. 12, A::g() - A::i()), die von der virtuellen Funktionstabelle der Basisklasse erhalten wurde.

10. Einrichtung nach Anspruch 9, worin die abgeleitete Klasse virtuelle Mitgliedsfunktionen enthält, die von einer dritten Klasse geerbt sind, und worin die Mittel zum Erzeugen der virtuelle Funtionstabelle für die abgeleitete Klasse umfassen:
Mittel (48, Fig. 3) zum Erzeugen eines virtuellen Funktionstabellen-Segments einer ersten abgeleiteten Klasse im Speicher, welche Lücken zur Aufnahme virtueller Funktionszeiger zu Funktionen enthält, die von der Basisklasse geerbt sind;
Mittel zum Erzeugen eines virtuellen Funktionstabellen-Segments einer zweiten abgeleiteten Klasse (Fig.3, Funktionszeiger 1 für Klasse B...), welche Lücken zur Aufnahme virtueller Funktionszeiger zu Funktionen enthält, die von der dritten Klasse geerbt sind; und
Mittel zum Erzeugen einer Vielzahl von Segment-Zeigern (46, Zeiger zu Funktionen für Klasse A...) in der virtuellen Funktionstabelle der abgeleiteten Klasse, jeder der Vielzahl von Segment-Zeiger zeigt zu einer ersten Adresse im Speicher von einem der virtuellen Funktionstabellen-Segmente der ersten und zweiten abgeleiteten Klasse.

11. Einrichtung nach Anspruch 10, enthaltend Mittel zum Lokalisieren des virtuellen Funktionstabellen-Deskriptors der Basisklasse mit dem Quellenzeiger.

12. Einrichtung nach Anspruch 11, worin die Erweiterungsmittel Mittel umfassen zum Anpassen der Vielzahl von Segment-Zeigern für die Erweiterung von wenigstens eines der virtuellen Funktionstabellen-Segmente einer abgeleiteten Klasse.

13. Einrichtung nach Anspruch 9, weiter enthaltend Mittel zum Zugriff zur Laufzeit auf eine virtuelle Mitgliedsfunktion mit der virtuellen Funktionstabelle der abgeleiteten Klasse durch Zugreifen auf eines der Vielzahl von virtuellen Funktionstabellen-Segmente mit den Segment-Zeigern und Berechnen einer Lückenversetzung innerhalb des Tabellensegments, auf das der Zugriff erfolgt ist.

14. Einrichtung nach Anspruch 9, weiter enthaltend Mittel zum Zugriff zur Laufzeit auf eine virtuelle Mitgliedsfunktion mit der virtuellen Funktionstabelle der abgeleiteten Klasse durch Benutzen des Inhalts einer virtuellen Tabellenlücke der abgeleiteten Klasse als ein Index zum Zugriff auf den ausführbaren Code der virtuellen Mitgliedsfunktion.

15. Einrichtung nach Anspruch 14, weiter enthaltend Mittel zum Anpassen des Indexes zur Laufzeit, wenn die virtuelle Tabelle der abgeleiteten Klasse angepaßt wird.

16. Einrichtung nach Anspruch 9, weiter enthaltend Mittel zum Erzeugen zur Kompilierzeit eine virtuelle Lokatortabelle; und Mittel zum Anpassen eines "dies" Zeigers zur Laufzeit für jede die virtuelle Lokatortabelle benutzende virtuelle Funktion.

## Revendications

1. Méthode destinée à être utilisée dans un système d'ordinateur (Fig. 19) pour générer une table de fonctions virtuelles pendant l'exécution pour une classe compilée qui est dérivée d'une classe de base et a au moins une fonction d'élément virtuel avec un code exécutable associé, la méthode générant au moment de la compilation à partir des instructions du code source, une table de fonctions virtuelles pour la classe de base (Fig. 12), la table de fonctions virtuelles de la classe de base contenant des adresses de code exécutable(Fig. 12, A : : f() - A:: i()), caractérisée en ce que la méthode comprend les étapes de :
a) générer au moment de la compilation (50)à partir des instructions du code source une table de fonctions virtuelles incomplète (58) pour la classe dérivée (Fig. 13), la table de fonctions virtuelles dérivée (58) contenant une zone (Fig. 13, B:: f()) pour chaque fonction d'élément virtuel de la classe dérivée connue au moment de la compilation,
b) initialiser au moment de la compilation (50) chaque zone de la table de fonctions virtuelles de classe dérivée correspondant à une fonction d'élément virtuel introduite ou annulée dans la classe dérivée avec une adresse de code exécutable (B : : f()),
c) créer au moment de la compilation (50) à partir des instructions du code source, un descripteur de table de fonctions virtuelles (60) pour la classe de base et pour la classe dérivée, le descripteur de table de fonctions virtuelles pour la classe dérivée contenant, pour chaque zone de la table de fonctions virtuelles correspondant à une fonction d'élément virtuel provenant de la classe de base, un pointeur source (Fig. 13, Source vtable est « A ») pointant au descripteur de table de fonctions virtuelles pour la classe de base,
d) étendre la table de fonctions virtuelles pour la classe dérivée (zones initialisées à 0) pour qu'elle contienne des zones pour les fonctions d'élément virtuel trouvées dans le descripteur de table de fonctions virtuelles pour la classe de base qui n'étaient pas présentes dans la table de fonctions virtuelles de la classe de base au moment de la compilation, et
e) initialiser pendant l'exécution (52) chaque zone de la table de fonctions virtuelles pour la classe dérivée correspondant à une fonction d'élément virtuel qui provenait de la classe de base à partir d'une adresse de code exécutable dans la table de fonctions virtuelle de la classe de base (Fig. 12, A:: g() - A : : i()).

2. Méthode telle que définie dans la revendication 1, dans laquelle la classe dérivée comprend des fonctions d'élément virtuel provenant d'une troisième classe et dans laquelle l'étape a) comprend les étapes de :
a1) créer un premier segment de table de fonctions virtuelles pour la classe dérivée (48, Fig. 3) contenant des zones de pointeurs de fonctions virtuelles vers des fonctions issues de la classe de base,
a2) créer un second segment de table de fonctions virtuelles pour la classe dérivée (Fig. 3, pointeur de fonction 1 pour la classe B...) contenant des zones de pointeurs de fonctions virtuelles vers des fonctions issues de la troisième classe, et
a3) créer une pluralité de pointeurs de segments (46, pointeur vers de fonctions pour la classe A...) dans la table de fonctions virtuelles pour la classe dérivée, chacun parmi le pluralité de pointeurs de segments pointant vers un des premier et second segments de table de fonctions virtuelles pour la classe dérivée.

3. Méthode telle que définie dans la revendication 2, comprenant en outre l'étape de :
f) localiser le descripteur de table de fonctions virtuelles avec le pointeur source.

4. Méthode telle que définie dans la revendication 3, dans laquelle l'étape d) comprend l'étape de :
d1) ajuster la pluralité de pointeurs de segments pour étendre au moins un des segments de table de fonctions virtuelles pour la classe dérivée.

5. Méthode telle que définie dans la revendication 1, comprenant en outre les étapes de :
g) accéder pendant l'exécution à une fonction d'élément virtuel avec la table de fonctions virtuelles pour la classe dérivée en accédant à l'un parmi la pluralité de segments au moyen des pointeurs de segments et calculer un décalage de zone à l'intérieur du segment de table accédé.

6. Méthode telle que définie dans la revendication 1, comprenant en outre l'étape de :
h) accéder pendant l'exécution à une fonction d'élément virtuel avec la table de fonctions virtuelles pour la classe dérivée en utilisant le contenu d'une zone de la table comme index pour accéder au code exécutable de fonction d'élément virtuel.

7. Méthode telle que définie dans la revendication 6, comprenant en outre l'étape de :
i) ajuster l'index pendant l'exécution lorsque la table virtuelle pour la classe dérivée est ajustée.

8. Méthode telle que définie dans la revendication 1, comprenant en outre les étapes de :
j) générer pendant la compilation une table virtuelle de localisation, et
k) ajuster pendant l'exécution un pointeur « ce » pour chaque fonction virtuelle utilisant la table virtuelle de localisation.

9. Appareil destiné à être utilisée dans un système d'ordinateur (Fig. 19) avec une mémoire pour générer une table de fonctions virtuelles en mémoire pendant l'exécution pour une classe compilée qui est dérivée d'une classe de base et a au moins une fonction d'élément virtuel avec un code exécutable associé en mémoire à une adresse prédéterminée, le système d'ordinateur comprenant en outre de moyens sensibles aux instructions du code source pour générer en mémoire au moment de la compilation, une table de fonctions virtuelles (Fig. 12) pour la classe de base, la table de fonctions virtuelles de la classe de base contenant des adresses de code exécutable(Fig. 12, A:: f() - A:: i()), caractérisé en ce que l'appareil comprend :
a) des moyens(50) pour, en réponse aux instructions du code source, générer en mémoire au moment de la compilation une table de fonctions virtuelles incomplète (58) pour la classe dérivée (Fig. 13), la table de fonctions virtuelles dérivée (58) contenant une zone (Fig. 13, B:: f()) pour chaque fonction d'élément virtuel de la classe dérivée connue au moment de la compilation,
b) des moyens (50) pour initialiser au moment de la compilation chaque zone de la table de fonctions virtuelles de classe dérivée correspondant à une fonction d'élément virtuel introduite dans la classe dérivée en emmagasinant une adresse de code exécutable (B:: f()) dans la zone,
c) des moyens (50) pour créer en mémoire au moment de la compilation, un descripteur de table de fonctions virtuelles (60) pour la classe de base et pour la classe dérivée, le descripteur de table de fonctions virtuelles pour la classe dérivée contenant, pour chaque zone de la table de fonctions virtuelles correspondant à une fonction d'élément virtuel provenant de la classe de base, un pointeur source (Fig. 13, Source vtable est «A») pointant à l'adresse du descripteur pour la classe de base,
d) des moyens pour étendre la table de fonctions virtuelles pour la classe dérivée (Fig. 13, zones initialisées à 0) pour qu'elle contienne des adresses pour le code exécutable zones correspondant aux fonctions d'élément virtuel trouvées dans le descripteur de table de fonctions virtuelles pour la classe de base qui n'étaient pas présentes dans la table de fonctions virtuelles de la classe de base au moment de la compilation, et
e) des moyens (52) pour initialiser pendant l'exécution chaque zone de la table de fonctions virtuelles pour la classe dérivée correspondant à une fonction d'élément virtuel qui provenait de la classe de base en y emmagasinant une adresse de code exécutable (Fig. 12, A:: g() - A : : i()) obtenue à partir de la table de fonctions virtuelle de la classe de base.

10. Appareil tel que défini dans la revendication 9, dans lequel la classe dérivée comprend des fonctions d'élément virtuel provenant d'une troisième classe et dans lequel les moyens de génération de table virtuelle pour la classe dérivée comprennent :
des moyens (48, Fig. 3) pour créer en mémoire un premier segment de table de fonctions virtuelles pour la classe dérivée contenant des zones mémorisant des pointeurs vers des adresses en code exécutable de fonctions issues de la classe de base,
des moyens pour créer un second segment de table de fonctions virtuelles pour la classe dérivée (Fig. 3, pointeur de fonction 1 pour la classe B...) contenant des zones mémorisant des pointeurs de fonctions virtuelles vers des adresses en code exécutable de fonctions issues de la troisième classe, et
des moyens pour créer une pluralité de pointeurs de segments (46, pointeur vers de fonctions pour la classe A...) dans la table de fonctions virtuelles pour la classe dérivée, chacun parmi le pluralité de pointeurs de segments pointant vers une adresse en mémoire de l'un des premier et second segments de table de fonctions virtuelles pour la classe dérivée.

11. Appareil tel que défini dans la revendication 10, comprenant en outre :
des moyens pour localiser le descripteur de table de fonctions virtuelles avec le pointeur source.

12. Appareil tel que défini dans la revendication 11, dans lequel les moyens d'extension comprennent:
des moyens pour ajuster la pluralité de pointeurs de segments pour étendre au moins un des segments de table de fonctions virtuelles pour la classe dérivée.

13. Appareil tel que défini dans la revendication 9, comprenant en outre :
des moyens pour accéder pendant l'exécution à une fonction d'élément virtuel avec la table de fonctions virtuelles pour la classe dérivée en accédant à l'un parmi la pluralité de segments an moyen des pointeurs de segments et calculer un décalage de zone à l'intérieur du segment de table accédé.

14. Appareil tel que défini dans la revendication 9, comprenant en outre :
des moyens pour accéder pendant l'exécution à une fonction d'élément virtuel avec la table de fonctions virtuelles pour la classe dérivée en utilisant le contenu d'une zone de la table comme index pour accéder au code exécutable de fonction d'élément virtuel.

15. Appareil tel que défini dans la revendication 14, comprenant en outre :
des moyens pour ajuster l'index pendant l'exécution lorsque la table virtuelle pour la classe dérivée est ajustée.

16. Appareil tel que défini dans la revendication 9, comprenant en outre :
des moyens pour générer pendant la compilation une table virtuelle de localisation, et
des moyens pour ajuster pendant l'exécution un pointeur «ce» pour chaque fonction virtuelle utilisant la table virtuelle de localisation.
